# EUROPEAN PATENT SPECIFICATION

(11) **EP 3 156 984 B1**
(45) Date of publication and mention of the grant of the patent: **12.09.2018**
(21) Application number: 16163443.1
(22) Date of filing: 31.03.2016
(51) Int. Cl.: G08B 21/22

(54) **VEHICLE ALARMING METHOD AND DEVICE, COMPUTER PROGRAM AND RECORDING MEDIUM**
FAHRZEUGALARMIERUNGSVERFAHREN UND VORRICHTUNG, COMPUTERPROGRAMM UND AUFZEICHNUNGSMEDIUM
DISPOSITIF ET PROCÉDÉ D'ALARME DE VÉHICULE, PROGRAMME INFORMATIQUE ET SUPPORT D'ENREGISTREMENT

(30) Priority: 13.10.2015 CN 201510660852
(43) Date of publication of application: 19.04.2017
(73) Proprietor: Xiaomi Inc., Beijing 100085 (CN)
(72) Inventor: LIU, Xinyu, 100085 BEIJING (CN); ZHAO, Tong, 100085 BEIJING (CN)
(74) Representative: Fontenelle, Sandrine

(56) References cited:
- CN-U- 204 087 428
- GB-A- 2 382 205
- US-A1- 2005 283 286

## Description

### TECHNICAL FIELD

The present invention relates to a stroller alarming method and device, a computer program and a recording medium.

### BACKGROUND

With strollers, as one of auxiliary tools for outdoor activities of infants, parents can carry the infants to do outdoor activities. In related arts, many strollers are equipped with anti-shock devices, brakes, height adjustment devices, and the like to improve the security assurance of the infants. However, personal safety of the infants will not be guaranteed when the parents are away from the strollers, for example, the infants in the strollers are taken away by others. Thus, the safety factors of the strollers in the related art are low, and more demands of users cannot be met accordingly. For example, UK Patent Application 2 382 205 (D1) discloses a system for detecting the removal of a vehicle wheel from a vehicle by monitoring changes in tire pressure. U.S. Patent Application Publication 2005/0283286 (D2) discloses a vehicle condition monitoring system for an unattended vehicle that monitors changes in an initial setting of the vehicle. Chinese Patent Application 204 087 428 (D3) discloses a baby outdoor burglar alarm device including means for detecting presence of a baby in a carrier and means for transmitting an alarm signal to a user terminal based on a distance between the carrier and the user terminal.

### SUMMARY

To overcome the above problems in the related art, the present invention provides a stroller alarming method and device, a computer program and a recording medium.

According to a first aspect of embodiments of the present invention, there is provided a stroller alarming method, comprising:
measuring a pressure value of a stroller through a pressure sensor;
detecting whether a paired terminal corresponding to the stroller exists in a preset distance range when the pressure value of the stroller is reduced to a preset pressure range; and
performing alarming when no paired terminal is detected.

According to the invention, measuring the pressure value of the stroller through the pressure sensor comprises: detecting a load of the whole stroller through a first pressure sensor arranged on a wheel of the stroller, the load of the whole stroller serving as a first pressure value of the stroller.

In a particular embodiment, detecting whether the paired terminal corresponding to the stroller exists in the preset distance range when the pressure value of the stroller is reduced to the preset pressure range comprises:
detecting whether the paired terminal corresponding to the stroller exists in the preset distance range when the first pressure value of the is reduced to a first preset pressure range,
wherein the first preset pressure range corresponds to the first pressure sensor, and is matched with a weight of a person or an article in the stroller.

According to an alternative aspect of the invention, measuring the pressure value of the stroller through the pressure sensor comprises: detecting a load of a cab of the stroller through a second pressure sensor arranged on the cab, the load of the cab serving as a second pressure value of the stroller.

In a particular embodiment, detecting whether the paired terminal corresponding to the stroller exists in the preset distance range when the pressure value of the stroller is reduced to the preset pressure range comprises:
detecting whether the paired terminal corresponding to the stroller exists in the preset distance range when the second pressure value of the stroller is reduced to a second preset pressure range,
wherein the second preset pressure range corresponds to the second pressure sensor, and is matched with a weight of a person or an article in the cab.

In a particular embodiment, detecting whether the paired terminal corresponding to the stroller exists in the preset distance range comprises: detecting whether the paired terminal corresponding to the stroller exists in the preset distance range through Bluetooth or wireless fidelity (Wi-Fi).

In a particular embodiment, performing alarming comprises:
performing alarming by sounding an alarm; and/or
sending an alarming message to the paired terminal through a mobile network or the Internet.

In a particular embodiment, after performing alarming, the method comprises:
canceling alarming when an alarm cancel message from the paired terminal is received.

In a particular embodiment, after performing alarming, the method comprises:
canceling alarming when it is detected that a distance between the stroller and the paired terminal is smaller than a preset distance range threshold.

In a particular embodiment, the method further comprises:
establishing a connection with the paired terminal through Bluetooth or wireless fidelity (Wi-Fi) when the paired terminal is detected; and
sending an alarm prompt message to the paired terminal via the connection.

In a particular embodiment, before detecting the pressure value of the stroller, the method further comprises: performing pairing with at least one preset terminal, the paired preset terminal serving as the paired terminal corresponding to the stroller.

In a particular embodiment, the paired terminal is a smart phone or a wearable smart device.

According to a second aspect of the present invention, there is provided a stroller alarming device, comprising:
a measuring module configured to measure a pressure value of a stroller through a pressure sensor;
a detecting module configured to detect whether a paired terminal corresponding to the stroller exists in a preset distance range when the pressure value of the stroller measured by the measuring module is reduced to a preset pressure range; and
an alarming module configured to perform alarming when no paired terminal is detected.

According to the invention, the measuring module comprises: a first measuring sub-module configured to detect a load of the whole stroller through a first pressure sensor arranged on the wheel of the stroller, the load of the whole stroller serving as a first pressure value of the stroller.

In a particular embodiment, the detecting module comprises:
a first detecting sub-module configured to detect whether the paired terminal corresponding to the stroller exists in the preset distance range when the first pressure value of the stroller is reduced to a first preset pressure range,
wherein the first preset pressure range corresponds to the first pressure sensor, and is matched with a weight of a person or an article in the stroller.

According to an alternative aspect of the invention, the measuring module comprises: a second measuring sub-module configured to detect a load of the cab of the stroller through a second pressure sensor arranged on the cab, the load of the cab serving as a second pressure value of the stroller.

In a particular embodiment, the detecting module comprises:
a second detecting sub-module configured to detect whether the paired terminal corresponding to the stroller exists in the preset distance range when the second pressure value of the stroller is reduced to a second preset pressure range,
wherein the second preset pressure range corresponds to the second pressure sensor, and is matched with a weight of a person or an article in the cab.

In a particular embodiment, the detecting module, the first detecting sub-module or the second detecting sub-module is further configured to detect whether the paired terminal corresponding to the stroller exists in the preset distance range through Bluetooth or wireless fidelity (Wi-Fi).

In a particular embodiment, the alarming module comprises a first alarming sub-module and/or a second alarming sub-module,
wherein the first alarming sub-module is configured to perform alarming by sounding an alarm; and
the second alarming sub-module is configured to send an alarming message to the paired terminal through a mobile network or the Internet.

In a particular embodiment, the device further comprises:
a first canceling alarming module configured to cancel alarming when an alarm cancel message from the paired terminal is received.

In a particular embodiment, the device further comprises:
a second canceling alarming module configured to cancel alarming when it is detected that the distance between the stroller and the paired terminal is smaller than a preset distance range threshold.

In a particular embodiment, the device further comprises:
a connecting module configured to establish a connection with the paired terminal through Bluetooth or wireless fidelity (Wi-Fi) when the paired terminal is detected; and
a sending module configured to send an alarm prompt message to the paired terminal via the connection.

In a particular embodiment, the device further comprises:
a pairing module configured to perform pairing with at least one preset terminal, the paired preset terminal serving as the paired terminal corresponding to the stroller.

In one particular embodiment, the steps of the stroller alarming method are determined by computer program instructions.

Consequently, according to a third aspect, the invention is also directed to a computer program for executing the steps of a stroller alarming method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions of the embodiments of this invention have the following advantageous effects:

In this invention, the pressure value of the stroller can be measured through the pressure sensor mounted thereon, whether the paired terminal corresponding to the stroller exists in the preset distance range is detected when the pressure value of the stroller is reduced to the preset pressure range, and alarming is performed when no paired terminal is detected, so that the stroller has a function of preventing the person or the article in the stroller from being lost, and the safety factor of the person or the article in the stroller is improved.

In this invention, the stroller may adopt the first pressure sensor arranged on the wheel to achieve stroller alarming, and the set first preset pressure range corresponds to the first pressure sensor, and is matched with the weight of the person or the article in the stroller, so that the stroller not only has an intelligent function of preventing the person or the article from being lost, but also may meet a design requirement of wheels thereof.

In this invention, the stroller may adopt the second pressure sensor arranged on the cab to achieve stroller alarming, and the set second pressure range corresponds to the second pressure sensor, and is matched with the weight of the person or the article in the cab, so that the stroller not only has the intelligent function of preventing the person or the article from being lost, but also may meet a design requirement of the cab thereof.

In this invention, different alarming approaches can be determined based on a detecting result on whether the paired terminal corresponding to the exists in the preset distance range; when no paired terminal is detected, the alarm is sounded, and the alarming message is sent to the paired terminal; and when the paired terminal is detected, all that is needed is to send the alarm promote message to the paired terminal, thereby the user experience is improved.

It should be understood that both the foregoing general description and the following detailed description are only exemplary and explanatory and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a stroller alarming method according to an exemplary embodiment of the invention.
Fig. 2 is a flow chart showing another stroller alarming method according to an exemplary embodiment of the invention.
Fig. 3 is an application scene view illustrating a stroller alarming method according to an exemplary embodiment of the invention.
Fig. 4 is a block diagram of a stroller alarming device according to an exemplary embodiment of the invention.
Fig. 5 is a block diagram of another stroller alarming device according to an exemplary embodiment of the invention.
Fig. 6 is a block diagram of another stroller alarming device according to an exemplary embodiment of the invention.
Fig. 7 is a block diagram of another stroller alarming device according to an exemplary embodiment of the invention.
Fig. 8 is a block diagram of another stroller alarming device according to an exemplary embodiment of the invention.
Fig. 9 is a block diagram of another stroller alarming device according to an exemplary embodiment of the invention.
Fig. 10 is a block diagram of another stroller alarming device according to an exemplary embodiment of the invention.
Fig. 11 is a block diagram of another stroller alarming device according to an exemplary embodiment of the invention.
Fig. 12 is a block diagram of another stroller alarming device according to an exemplary embodiment of the invention.
Fig. 13 is a block diagram of another stroller alarming device according to an exemplary embodiment of the invention.
Fig. 14 is a schematic diagram illustrating a paired terminal according to an exemplary embodiment of the invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terms used in this invention are only intended to describe the specific embodiments rather than to limit this invention. The terms such as "a/an", "the" and "said" in single forms used in this invention and the appended claims are also intended to include plural forms, unless clearly specified otherwise in the context. It should be noted that, the term "and/or" used herein includes any or all possible combinations of one or more related listed items.

It should be noted that although terms such as "first", "second" and "third" are used to describe various information in this invention, such information shall not be limited to these terms. These terms are only used to distinguish information of the same type. For example, when not departing from the scope of this invention, first information may also be named as second information, and vice versa. Depending on the context, the word "if" used herein may be interpreted as "when" or "determining that ... in response to".
In the following detailed description, the stroller is called "stroller" or "vehicle". Also when called "vehicle", the term "vehicle" is intended to refer to a stroller.

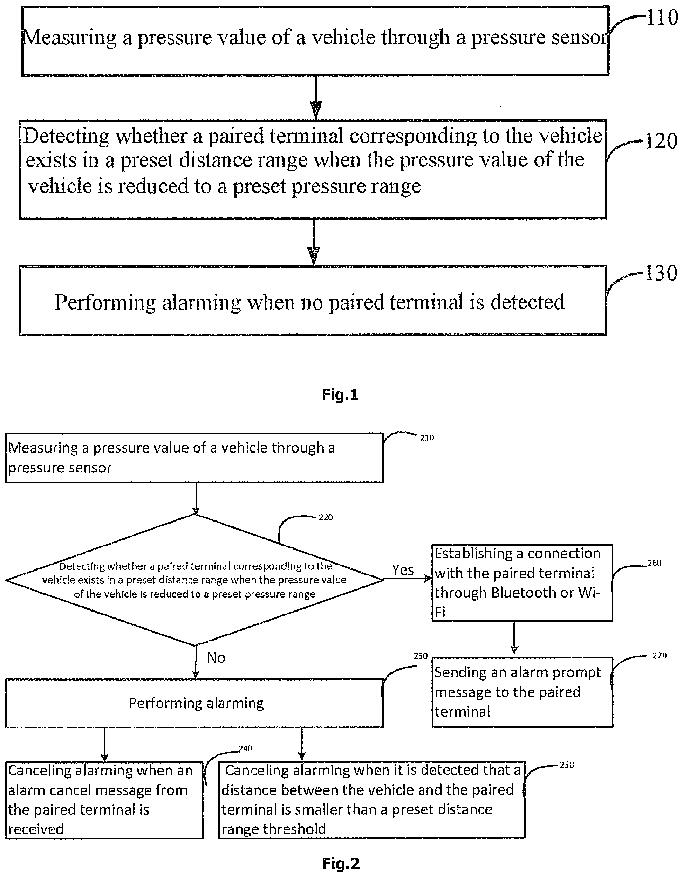

Fig. 1 is a flow chart showing a stroller alarming method according to an exemplary embodiment. As shown in Fig. 1, the method may comprise the following steps: Step 110, measuring a pressure value of a vehicle through a pressure sensor.

In the embodiment of this invention, the pressure sensor may be mounted on the vehicle to measure the pressure value of the vehicle, so that whether a person or an article in the vehicle is missing can be determined according to the change of the vehicle pressure value. The pressure sensor may be mounted on a wheel of the vehicle, in the cab of the vehicle, or the like.

For instance, the weight change of an infant sitting in the stroller can be measured by the pressure sensor.
Step 120, detecting whether a paired terminal (e.g. a smartphone, a wearable device or the like) corresponding to the vehicle exists in a preset distance range when the pressure value of the vehicle is reduced to a preset pressure range.

In the embodiment of this invention, the preset pressure range is matched with the weight of a person or an article in the vehicle. When the pressure value of the vehicle is reduced to the preset pressure range, which means the person or the article may have left the vehicle, it is needed to detect whether a watcher of the vehicle is near to the vehicle.

In order to detect whether the watcher of the vehicle is near to the vehicle, an intelligent communication module may be mounted on the vehicle. One terminal of the intelligent communication module may be connected to the pressure sensor, whereas another terminal of the intelligent communication module may be connected to the paired terminal, wherein the paired terminal corresponds to the watcher (of the vehicle) carrying the paired terminal, that is, the paired terminal is used to represent the corresponding watcher or equivalently the vehicle watched by the watcher.

The intelligent communication module, generally in a dormant state, can be activated only when the pressure value of the vehicle measured by the pressure sensor is reduced to the preset pressure range, and can detect whether the paired terminal corresponding to the vehicle exists in the preset distance range, wherein the preset distance range can be set, according to an actual situation, for example, as 10 meters.

In the embodiment of this invention, there are many methods for detecting whether the paired terminal corresponding to the vehicle exists in the preset distance range, for instance, whether the paired terminal corresponding to the vehicle exists in the preset distance range is detected through Bluetooth or wireless fidelity (Wi-Fi), wherein the preset distance range corresponds to the adopted detection measure. For example, if the Bluetooth detection distance is 10 meters, the preset distance range may be set within 10 meters.

When the paired terminal is detected, which means that the watcher of the vehicle is nearby, it may not need to sound an alarm, or just the alarm promote message is sent to the watcher. When no paired terminal is detected, which means that no watcher of the vehicle is nearby, alarming is needed at the moment.

For example, if a stroller is 10 kg and an infant in the stroller is 10 kg, a preset pressure range can be set between 10-14 kg according to the actual situation. When it is detected that a pressure value of the vehicle is between 10-14 kg, which indicates the infant in the stroller may be taken away or fell down from the stroller, whether a watcher of the infant is near to the stroller is determined by detecting whether a paired terminal corresponding to the stroller exists in a preset distance range.

Step 130, performing alarming when no paired terminal is detected.

In the embodiment of this invention, alarming is needed when it is determined that no watcher of the vehicle is near to the vehicle, wherein alarming approaches may include, but are not limited to, the three approaches which are given below.

In the first approach, an alarm is sounded.

In the second approach, an alarming message is sent to the paired terminal.

In the third approach, the alarm is sounded and the alarming message is sent to the paired terminal.

As it can be seen from the above embodiments, the pressure value of the vehicle can be measured through the pressure sensor mounted thereon, whether the paired terminal corresponding to the vehicle exists in the preset distance range is detected when the pressure value of the vehicle is reduced to the preset pressure range, and alarming is performed when no paired terminal is detected, so that the vehicle has a function of preventing the person or the article in the vehicle from being lost, and the safety factor of the person or the article in the vehicle is improved.

In one embodiment of the invention, before the pressure value of the vehicle is detected through the pressure sensor during performing the step 110, the vehicle needs to be paired with at least one preset terminal, and the paired preset terminal serves as the paired terminal corresponding to the vehicle.

In this invention, the paired terminal can be a smart phone, or any one of wearable smart devices, such as a smart bracelet, and is applicable to all of the embodiments of this invention.

As it can be seen from the above embodiments, the vehicle may preset the corresponding paired terminal thereof, so as to detect whether the corresponding paired terminal exists around and send the alarming message or the alarm promote message to the corresponding paired terminal conveniently, thereby the efficiency and practicality in vehicle alarming can be improved.

In one embodiment of the invention, during detecting the pressure value of the vehicle through the pressure sensor in step 110, a load of the whole vehicle may be detected through a first pressure sensor arranged on a wheel of the vehicle, the load of the whole vehicle serving as a first pressure value of the vehicle.

Correspondingly, detecting whether the paired terminal corresponding to the vehicle exists in the preset distance range when the pressure value of the vehicle is reduced to the preset pressure range in step 120 can be performed by detecting whether the paired terminal corresponding to the vehicle exists in the preset distance range when the first pressure value of the vehicle is reduced to a first preset pressure range, wherein the first preset pressure range corresponds to the first pressure sensor, and is matched with a weight of a person or an article in the vehicle.

In the embodiment of the invention, as the first pressure sensor measures the load of the whole vehicle, the weight of not only the vehicle, but also the person or the article in the vehicle needs to be taken into consideration. In addition, whether the paired terminal corresponding to the vehicle exists in the preset distance range can be detected through Bluetooth or Wi-Fi.

As it can be seen from the above embodiments, the vehicle may adopt the first pressure sensor arranged on the wheel to achieve vehicle alarming, and the set first preset pressure range corresponds to the first pressure sensor, and is matched with the weight of the person or the article in the vehicle, so that the vehicle not only has an intelligent function of preventing the person or the article from being lost, but also may meet a design requirement of wheels thereof.

In one embodiment of the invention, during detecting the pressure value of the vehicle through the pressure sensor in step 110, a load of the cab of the vehicle is detected through a second pressure sensor arranged on the cab, the load of the cab serving as a second pressure value of the vehicle.

Correspondingly, detecting whether the paired terminal corresponding to the vehicle exists in the preset distance range when the pressure value of the vehicle is reduced to the preset pressure range in step 120 can be performed by detecting whether the paired terminal corresponding to the vehicle exists in the preset distance range when the second pressure value of the vehicle is reduced to a second preset pressure range, wherein the second preset pressure range corresponds to the second pressure sensor, and is matched with a weight of a person or an article in the vehicle.

In the embodiment of the invention, as the second pressure sensor measures the load of the cab, the weight of not only the cab, but also the person or the article in the cab needs to be took into consideration. In addition, whether the paired terminal corresponding to the vehicle exists in the preset distance range may be detected through Bluetooth or Wi-Fi.

As it can be seen from the above embodiments, the vehicle may adopt the second pressure sensor arranged on the cab to achieve vehicle alarming, and the set second preset pressure range corresponds to the second pressure sensor, and is matched with the weight of the person or the article in the cab, so that the vehicle not only has an intelligent function of preventing the person or the article from being lost, but also may meet a design requirement of the cab thereof.

Fig. 2 is a flow chart showing another stroller alarming method according to an exemplary embodiment of the invention. The method as shown in Fig. 2, which is based on the method shown in Fig. 1, may comprise the following steps:
Step 210, measuring a pressure value of a vehicle through a pressure sensor.
Step 220, detecting whether a paired terminal corresponding to the vehicle exists in a preset distance range when the pressure value of the vehicle is reduced to a preset pressure range. When no paired terminal is detected, step 230 is performed; and when the paired terminal is detected, step 260 is performed.
Step 230, performing alarming.

In the embodiment of the invention, alarming is realized by sounding an alarm and sending an alarming message to the paired terminal through a mobile network or the Internet.

Step 240, canceling alarming when an alarm cancel message from the paired terminal is received, so as to complete the process.

In the embodiment of the invention, after the alarm cancel message from the paired terminal is received, which shows the watcher of the vehicle may have eliminated the security risk of the person or the article, and alarming can be canceled under the instruction of the watcher.

Step 250, canceling alarming when it is detected that a distance between the vehicle and the paired terminal is smaller than a preset distance range threshold, so as to complete the process.

In the embodiment of the invention, the preset distance range can be determined, according to an actual situation, for example, as 1 meter. When it is detected that the distance between the vehicle and the paired terminal is smaller than 1 meter, which shows that the watcher of the vehicle is close to the vehicle, continuous alarming becomes unnecessary, so that alarming can be cancelled.

Step 260, establishing a connection with the paired terminal through Bluetooth or Wi-Fi.

Step 270, sending an alarm prompt message to the paired terminal, so as to complete the process.

Seen from the above embodiments, different alarming approaches for the vehicle can be determined based on a detecting result on whether the paired terminal corresponding to the vehicle exists in the preset distance range; when no paired terminal is detected, the alarm is sounded, and the alarming message is sent to the paired terminal; and when the paired terminal is detected, all that is needed is to send the alarm promote message to the paired terminal, thereby the user experience is improved.

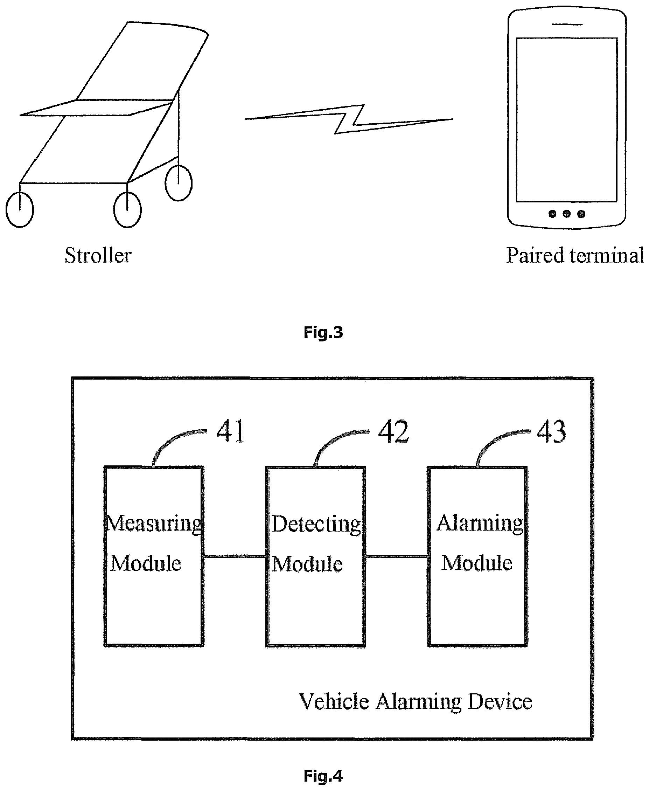

Fig. 3 is an application scene view illustrating a stroller alarming method according to an exemplary embodiment of the invention. As shown in Fig. 3, the application scene comprises a stroller and a paired terminal.

A pressure sensor, an intelligent communication module and an alarming module are mounted on the stroller, wherein the pressure sensor is configured to measure a pressure value of the stroller; the intelligent communication module is configured to detect whether the paired terminal corresponding to the stroller exists in a preset distance range; and the alarming module is configured to perform alarming when no paired terminal is detected.

In the application scene shown in Fig. 3, the detailed implementing processes of stroller alarming may refer to the preceding description for Fig. 1 and Fig. 2, which are not given herein any more.

Corresponding to the embodiments of the aforementioned stroller alarming method, the invention further provides embodiments of the stroller alarming device.

Fig. 4 is a block diagram of a stroller alarming device according to an exemplary embodiment of the invention. As shown in Fig. 4, the device is configured to perform the stroller alarming method shown in Fig. 1, and comprises a measuring module 41, a detecting module 42 and an alarming module 43,
wherein the measuring module 41 is configured to measure a pressure value of a vehicle through a pressure sensor;
the detecting module 42 is configured to detect whether a paired terminal corresponding to the vehicle exists in a preset distance range when the pressure value of the vehicle measured by the measuring module is reduced to a preset pressure range; and
the alarming module 43 is configured to perform alarming when no paired terminal is detected.

The paired terminal may be any one of smart phones or wearable smart devices.

As it can be seen from the above embodiments, the pressure value of the vehicle can be measured through the pressure sensor mounted thereon, whether the paired terminal corresponding to the vehicle exists in the preset distance range is detected when the pressure value of the vehicle is reduced to the preset pressure range, and alarming is performed when no paired terminal is detected, so that the vehicle has a function of preventing a person or an article in the vehicle from being lost, and the safety factor of the person or the article in the vehicle is improved.

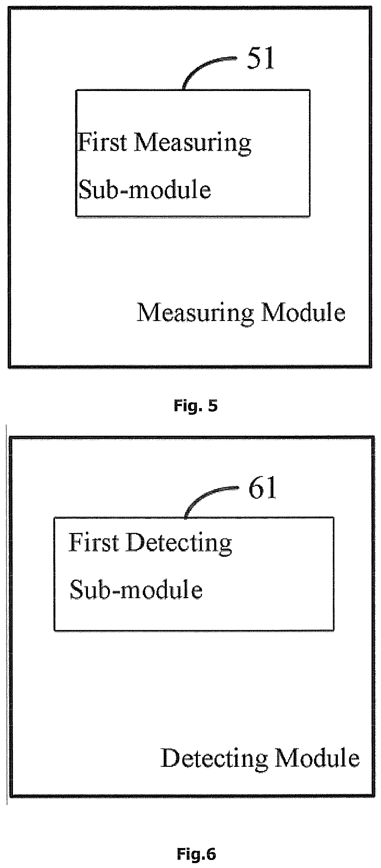

Fig. 5 is a block diagram of another stroller alarming device according to an exemplary embodiment of the invention. As shown in Fig. 5, this embodiment is implemented on the basis of that shown in Fig. 4, and the measuring module 41 may comprise a first measuring sub-module 51,
wherein the first measuring sub-module 51 is configured to detect a load of the whole vehicle through a first pressure sensor arranged on a wheel of the vehicle, the load of the whole vehicle serving as a first pressure value of the vehicle.

Fig. 6 is a block diagram of another vehicle alarming device according to an exemplary embodiment of the invention. As shown in Fig. 6, this embodiment is implemented on the basis of that shown in Fig. 5, and the detecting module 42 may comprise a first detecting sub-module 61.

The first detecting sub-module 61 is configured to detect whether the paired terminal corresponding to the vehicle exists in the preset distance range when the first pressure value of the vehicle is reduced to a first preset pressure range,

wherein the first preset pressure range corresponds to the first pressure sensor, and is matched with a weight of a person or an article in the vehicle.

As it can be seen from the above embodiments, the paired terminal corresponding to the vehicle can be preset, so that the vehicle can detect whether the corresponding paired terminal exists around and send an alarming message or an alarm promote message to the corresponding paired terminal conveniently, thereby the efficiency and practicality in vehicle alarming can be improved.

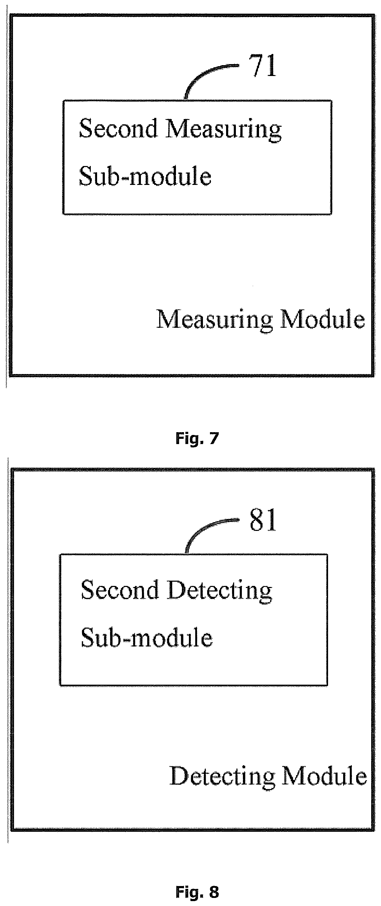

Fig. 7 is a block diagram of another stroller alarming device according to an exemplary embodiment of the invention. As shown in Fig. 7, this embodiment is implemented on the basis of that shown in Fig. 4, and the measuring module 41 may comprise a second measuring sub-module 71,
wherein the second measuring sub-module 71 is configured to detect a load of the cab of the vehicle through a second pressure sensor arranged on the cab, the load of the cab serving as a second pressure value of the vehicle.

Fig. 8 is a block diagram of another stroller alarming device according to an exemplary embodiment of the invention. As shown in Fig. 8, this embodiment is implemented on the basis of that shown in Fig. 7, and the detecting module 42 may comprise a second detecting sub-module 81.

The second detecting sub-module 81 is configured to detect whether the paired terminal corresponding to the vehicle exists in the preset distance range when the second pressure value of the vehicle is reduced to a second preset pressure range,
wherein the second preset pressure range corresponds to the second pressure sensor, and is matched with a weight of a person or an article in the cab.

Seen from the above embodiments, vehicle alarming can be realized by adopting the first pressure sensor arranged on the wheel, and the set first preset pressure range corresponds to the first pressure sensor, and is matched with the weight of the person or the article in the vehicle, so that the vehicle not only has an intelligent function of preventing the person or the article from being lost, but also may meet a design requirement of wheels thereof.

In addition, the detecting module 42, the first detecting sub-module 61 or the second detecting sub-module 81 is further configured to detect whether the paired terminal corresponding to the vehicle exists in the preset distance range through Bluetooth or wireless fidelity (Wi-Fi).

As it can be seen from the above embodiments, vehicle alarming can be realized by adopting the second pressure sensor arranged on the cab, and the set second preset pressure range corresponds to the second pressure sensor, and is matched with the weight of the person or the article in the cab, so that the vehicle not only has the intelligent function of preventing the person or the article from being lost, but also may meet a design requirement of the cab thereof.

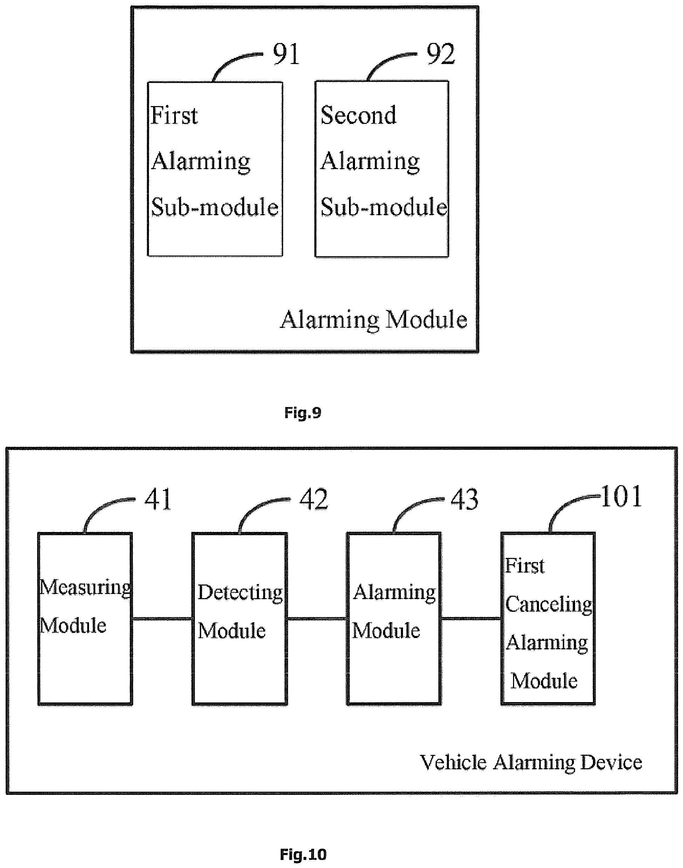

Fig. 9 is a block diagram of another stroller alarming device according to an exemplary embodiment of the invention. As shown in Fig. 9, this embodiment is implemented on the basis of that shown in Fig. 4, and the alarming module 43 may comprise a first alarming sub-module 91 and/or a second alarming sub-module 92,
wherein the first alarming sub-module is configured to perform alarming by sounding an alarm; and
the second alarming sub-module is configured to send an alarming message to the paired terminal through a mobile network or the Internet.

Fig. 10 is a block diagram of another stroller alarming device according to an exemplary embodiment of the invention. As shown in Fig. 10, this embodiment is implemented on the basis of that shown in Fig. 4, and the device further comprises a first canceling alarming module 101,
wherein the first canceling alarming module 101 is configured to cancel alarming when an alarm cancel message from the paired terminal is received.

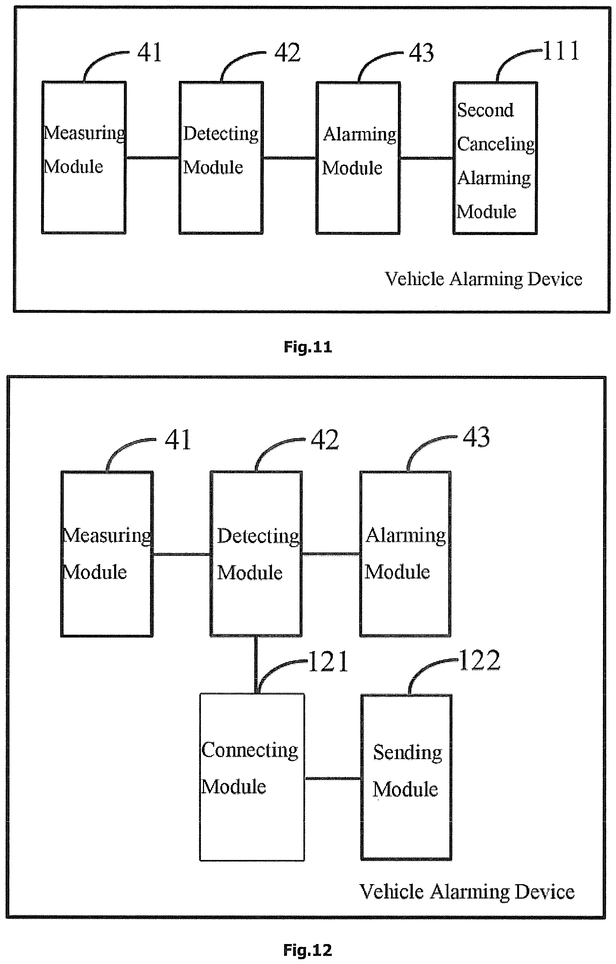

Fig. 11 is a block diagram of another stroller alarming device according to an exemplary embodiment of the invention. As shown in Fig. 11, this embodiment is implemented on the basis of that shown in Fig. 4, and the device further comprises a second canceling alarming module 111,
wherein the second canceling alarming module 111 is configured to cancel alarming when it is detected that the distance between the vehicle and the paired terminal is smaller than a preset distance range threshold.

Fig. 12 is a block diagram of another stroller alarming device according to an exemplary embodiment of the invention. As shown in Fig. 12, this embodiment is implemented on the basis of that shown in Fig. 4, and the device further comprises a connecting module 121 and a sending module 122,
wherein the connecting module 121 is configured to establish a connection with the paired terminal through Bluetooth or wireless fidelity (Wi-Fi) when the paired terminal is detected; and
the sending module 122 is configured to send an alarm prompt message to the paired terminal via the connection.

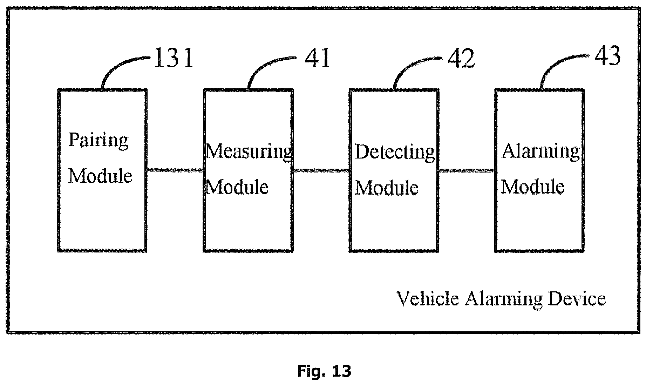

Fig. 13 is a block diagram of another stroller alarming device according to an exemplary embodiment of the invention. As shown in Fig. 13, this embodiment is implemented on the basis of that shown in Fig. 4, and the device further comprises a pairing module 131,
wherein the paring module 131 is configured to perform pairing with at least one preset terminal, the paired preset terminal serving as the paired terminal corresponding to the vehicle.

As it can be seen from the above embodiments, different alarming approaches for the vehicle can be determined based on a detecting result on whether the paired terminal corresponding to the vehicle exists in the preset distance range; when no paired terminal is detected, the alarm is sounded and the alarming message is sent to the paired terminal; and when the paired terminal is detected, all that is needed is to send the alarm promote message to the paired terminal, thereby the user experience is improved.

Corresponding to Fig. 4, the invention further provides another stroller alarming device comprising:
a processor; and
a memory configured to store an instruction executable by the processor,
wherein the processor is configured to:
   measure a pressure value of a vehicle through a pressure sensor;
   detect whether a paired terminal corresponding to the vehicle exists in a preset distance range when the pressure value of the vehicle is reduced to a preset pressure range; and
   perform alarming when no paired terminal is detected.

The implementing processes of functions and effects of all units of the above devices may refer to those of corresponding steps in the above methods, and the detailed description of which are not given herein any more.

Since the device embodiments substantially correspond to the method embodiments, similar parts of the method embodiments may be referred to for the device embodiments. The above device embodiments are illustrative only. The units described as separate members may be or may not be physically separated. The members described as units may be or may not be physical units, may be located at the same place or may be distributed in multiple network units. The objectives of the solutions of this invention may be realized by selecting some or all of the modules according to the actual needs. The above can be understood and implemented by those skilled in the art without any inventive work.

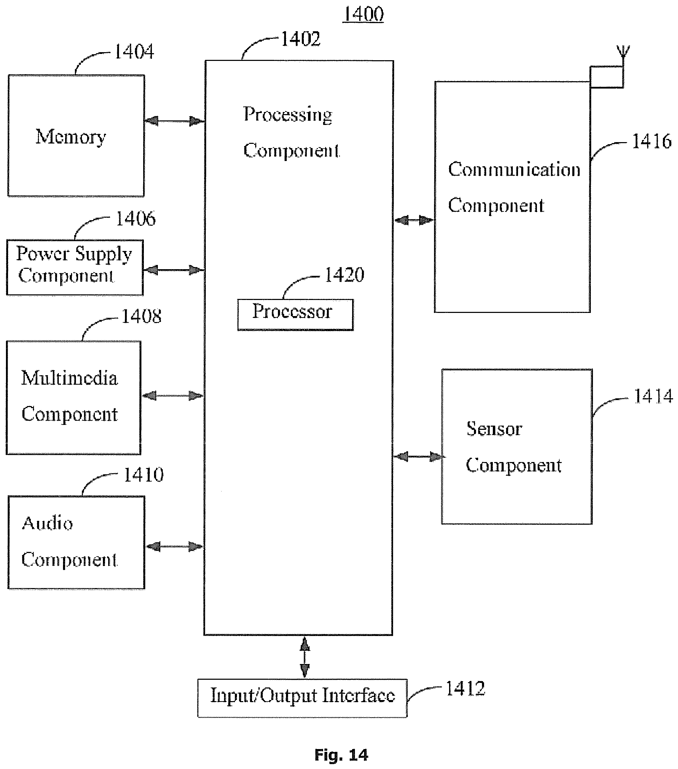

Fig. 14 is a schematic diagram illustrating a paired terminal 1400 according to an exemplary embodiment of the invention. As shown in Fig. 14, the paired terminal 1400 may be a mobile phone with a routing function, a computer, a digital broadcast terminal, a message transceiver, a game console, a tablet device, a medical device, fitness equipment, a personal digital assistant, or the like.

Referring to Fig. 14, the paired terminal 1400 may include one or more following components: a processing component 1402, a memory 1404, a power supply component 1406, a multimedia component 1408, an audio component 1410, an input/output (I/O) interface 1412, a sensor component 1414 and a communication component 1416.

The processing component 1402 typically controls overall operations of the paired terminal 1400, such as the operations associated with display, telephone calls, data communications, camera operations and recording operations. The processing component 1402 may include one or more processors 1420 to execute instructions to perform all or part of the steps in the above described methods. Moreover, the processing component 1402 may include one or more modules which facilitate the interaction between the processing component 1402 and other components. For example, the processing component 1402 may comprise a multimedia module to facilitate the interaction between the multimedia component 1408 and the processing component 1402.

The memory 1404 is configured to store various types of data to support the operation of the paired terminal 1400. Examples of such data include instructions for any applications or methods operated on the paired terminal 1400, contact data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 1406 provides power to various components of the paired terminal 1400. The power supply component 1406 may include a power supply management system, one or more power sources, and any other components associated with the generation, management, and distribution of power in the paired terminal 1400.

The multimedia component 1408 includes a screen providing an output interface between the paired terminal 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 1408 includes a front camera and/or a rear camera. The front camera and/or the rear camera may receive an external multimedia datum while the paired terminal 1400 is in an operation mode, such as a photographing mode or a video mode. Each of the front and rear cameras may be a fixed optical lens system or have a focus and optical zoom capability.

The audio component 1410 is configured to output and/or input audio signals. For example, the audio component 1410 includes a microphone (MIC) configured to receive an external audio signal when the paired terminal 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a keyboard, a click wheel, buttons, and the like. The buttons may include, but are not limited to, a home button, a volume button, a starting button, and a locking button.

The sensor component 1414 includes one or more sensors to provide status assessments of various aspects of the paired terminal 1400. For instance, the sensor component 1414 may detect an open/closed status of the paired terminal 1400, relative positioning of components, e.g., the display and the keypad, of the paired terminal 1400, a change in position of the paired terminal 1400 or a component of the paired terminal 1400, a presence or absence of user's contact with the paired terminal 1400, an orientation or an acceleration/deceleration of the paired terminal 1400, and a change in temperature of the paired terminal 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, a microwave sensor or a temperature sensor.

The communication component 1416 is configured to facilitate communication, wired or wirelessly, between the paired terminal 1400 and other devices. The paired terminal 1400 can access a wireless network based on a communication standard, such as WiFi, 2G, or 3G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the paired terminal 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium comprising instructions, such as comprised in the memory 1404, executable by the processor 1420 in the paired terminal 1400, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A stroller alarming method, comprising:
measuring (110, 210) a pressure value of a stroller through a pressure sensor, wherein measuring the pressure value of the stroller through the pressure sensor comprises:
detecting a load of the whole stroller through a first pressure sensor arranged on a wheel of the stroller, the load of the whole stroller serving as a first pressure value of the stroller; or
detecting a load of a cab of the stroller through a second pressure sensor arranged on the cab, the load of the cab serving as a second pressure value of the stroller;
detecting (120,220) whether a paired terminal corresponding to the stroller exists in a preset distance range when the pressure value of the stroller is reduced to a preset pressure range; and
performing (130,230) alarming when no paired terminal is detected.

2. The method of claim 1, wherein measuring the pressure value of the stroller through the pressure sensor comprises detecting the load of the whole stroller through the first pressure sensor arranged on the wheel of the stroller, and wherein detecting whether the paired terminal corresponding to the stroller exists in the preset distance range when the pressure value of the stroller is reduced to the preset pressure range comprises:
detecting whether the paired terminal corresponding to the stroller exists in the preset distance range when the first pressure value of the stroller is reduced to a first preset pressure range,
wherein the first preset pressure range corresponds to the first pressure sensor, and is matched with a weight of a person or an article in the stroller.

3. The method of claim 1, wherein measuring the pressure value of the stroller through the pressure sensor comprises detecting the load of the cab of the vehicle through the second pressure sensor arranged on the cab, and wherein detecting whether the paired terminal corresponding to the stroller exists in the preset distance range when the pressure value of the stroller is reduced to the preset pressure range comprises:
detecting whether the paired terminal corresponding to the stroller exists in the preset distance range when the second pressure value of the stroller is reduced to a second preset pressure range,
wherein the second preset pressure range corresponds to the second pressure sensor, and is matched with a weight of a person or an article in the cab.

4. The method of claim 1, 2 or 3, wherein detecting whether the paired terminal corresponding to the stroller exists in the preset distance range comprises:
detecting whether the paired terminal corresponding to the stroller exists in the preset distance range through Bluetooth or wireless fidelity (Wi-Fi).

5. The method of any of claims 1 to 4 wherein performing alarming comprises:
performing alarming by sounding an alarm; and/or
sending an alarming message to the paired terminal through a mobile network or the Internet.

6. The method of any of claims 1 to 5 wherein after performing alarming, the method comprises:
canceling (240) alarming when an alarm cancel message from the paired terminal is received.

7. The method of any of claims 1 to 6 wherein after performing alarming, the method comprises:
canceling (250) alarming when it is detected that a distance between the stroller and the paired terminal is smaller than a preset distance range threshold.

8. The method of any of claims 1 to 7 wherein the method further comprises:
establishing (260) a connection with the paired terminal through Bluetooth or wireless fidelity (Wi-Fi) when the paired terminal is detected; and
sending (270) an alarm prompt message to the paired terminal via the connection.

9. The method of of any of claims 1 to 8 wherein before detecting the pressure value of the stroller, the method further comprises:
performing pairing with at least one preset terminal, the paired preset terminal serving as the paired terminal corresponding to the stroller.

10. The method of claim 1, 2, 3, 5, 6, 7, 8 or 9 wherein the paired terminal is a smart phone or a wearable smart device.

11. A stroller alarming device, comprising:
a processor (1420); and
a memory (1404) configured to store an instruction executable by the processor,
wherein the processor is configured to:
measure a pressure value of a stroller through a pressure sensor;
detect whether a paired terminal corresponding to the stroller exists in a preset distance range when the pressure value of the stroller is reduced to a preset pressure range; and
perform alarming when no paired terminal is detected
wherein to measure the pressure value of the stroller through the pressure sensor, the processor (1420) is further configured to:
detect a load of the whole stroller through a first pressure sensor arranged on a wheel of the stroller, the load of the whole stroller serving as a first pressure value of the stroller; or
detect a load of a cab of the stroller through a second pressure sensor arranged on the cab, the load of the cab serving as a second pressure value of the stroller.

12. A computer program including instructions for executing the steps of a stroller alarming method according to any of claims 1 to 10 when said program is executed by a computer.

13. A recording medium readable by a computer and having recorded thereon a computer program including instructions for executing the steps of a stroller alarming method according to any one of claims 1 to 10.

## Patentansprüche

1. Kinderwagenalarmierungsverfahren, umfassend:
Messen (110, 210) eines Druckwertes eines Kinderwagens durch einen Drucksensor, wobei das Messen des Druckwertes des Kinderwagens durch den Drucksensor umfasst:
Detektieren einer Last des gesamten Kinderwagens durch einen ersten Drucksensor, der an einem Rad des Kinderwagens angeordnet ist, wobei die Last des gesamten Kinderwagens als ein erster Druckwert des Kinderwagens dient, oder
Detektieren einer Last eines Korbes des Kinderwagens durch einen zweiten Drucksensor, der an dem Korb angeordnet ist, wobei die Last des Korbes als ein zweiter Druckwert des Kinderwagens dient,
Detektieren (120, 220), ob ein gepaartes Endgerät, das zu dem Kinderwagen gehört, in einem voreingestellten Entfernungsbereich vorhanden ist, wenn der Druckwert des Kinderwagens auf einen voreingestellten Druckbereich reduziert wird, und
Ausführen (130, 230) der Alarmierung, wenn kein gepaartes Endgerät detektiert wird.

2. Verfahren nach Anspruch 1, wobei das Messen des Druckwertes des Kinderwagens durch den Drucksensor das Detektieren der Last des gesamten Kinderwagens durch den ersten Drucksensor, der an dem Rad des Kinderwagens angeordnet ist, umfasst, und wobei das Detektieren, ob das gepaarte Endgerät, das zu dem Kinderwagen gehört, in dem voreingestellten Entfernungsbereich vorhanden ist, wenn der Druckwert des Kinderwagens auf den voreingestellten Druckbereich reduziert wird, umfasst:
Detektieren, ob das gepaarte Endgerät, das zu dem Kinderwagen gehört, in dem voreingestellten Entfernungsbereich vorhanden ist, wenn der erste Druckwert des Kinderwagens auf einen ersten voreingestellten Druckbereich reduziert wird,
wobei der erste voreingestellte Druckbereich zu dem ersten Drucksensor gehört und auf ein Gewicht einer Person oder eines Gegenstandes in dem Kinderwagen abgestimmt ist.

3. Verfahren nach Anspruch 1, wobei das Messen des Druckwertes des Kinderwagens durch den Drucksensor das Detektieren der Last des Korbes des Fahrzeugs durch den zweiten Drucksensor, der an dem Korb angeordnet ist, umfasst, und wobei das Detektieren, ob das gepaarte Endgerät, das zu dem Kinderwagen gehört, in dem voreingestellten Entfernungsbereich vorhanden ist, wenn der Druckwert des Kinderwagens auf den voreingestellten Druckbereich reduziert wird, umfasst:
Detektieren, ob das gepaarte Endgerät, das zu dem Kinderwagen gehört, in dem voreingestellten Entfernungsbereich vorhanden ist, wenn der zweite Druckwert des Kinderwagens auf einen zweiten voreingestellten Druckbereich reduziert wird,
wobei der zweite voreingestellte Druckbereich zu dem zweiten Drucksensor gehört und auf ein Gewicht einer Person oder eines Gegenstandes in dem Korb abgestimmt ist.

4. Verfahren nach Anspruch 1, 2 oder 3, wobei das Detektieren, ob das gepaarte Endgerät, das zu dem Kinderwagen gehört, in dem voreingestellten Entfernungsbereich vorhanden ist, umfasst:
Detektieren, durch Bluetooth oder Wireless Fidelity (Wi-Fi), ob das gepaarte Endgerät, das zu dem Kinderwagen gehört, in dem voreingestellten Entfernungsbereich vorhanden ist.

5. Verfahren nach einem der Ansprüche 1 bis 4, wobei das Ausführen der Alarmierung umfasst:
Ausführen der Alarmierung durch Ertönenlassen eines Alarms, und/oder
Senden einer Alarmierungsnachricht an das gepaarte Endgerät durch ein Mobilfunknetz oder das Internet.

6. Verfahren nach einem der Ansprüche 1 bis 5, wobei das Verfahren, nach dem Ausführen der Alarmierung, umfasst:
Abbrechen (240) der Alarmierung, wenn eine Alarmabbruchnachricht von dem gepaarten Endgerät empfangen wird.

7. Verfahren nach einem der Ansprüche 1 bis 6, wobei das Verfahren, nach dem Ausführen der Alarmierung, umfasst:
Abbrechen (250) der Alarmierung, wenn detektiert wird, dass eine Distanz zwischen dem Kinderwagen und dem gepaarten Endgerät kleiner ist als eine voreingestellte Entfernungsbereichsschwelle.

8. Verfahren nach einem der Ansprüche 1 bis 7, wobei das Verfahren ferner umfasst:
Herstellen (260) einer Verbindung mit dem gepaarten Endgerät durch Bluetooth oder Wireless Fidelity (Wi-Fi), wenn das gepaarte Endgerät detektiert wird, und
Senden (270) einer Alarmaufforderungsnachricht an das gepaarte Endgerät über die Verbindung.

9. Verfahren nach einem der Ansprüche 1 bis 8, wobei das Verfahren vor dem Detektieren des Druckwertes des Kinderwagens ferner umfasst:
Ausführen einer Paarung mit mindestens einem voreingestellten Endgerät, wobei das gepaarte voreingestellte Endgerät als das gepaarte Endgerät dient, das zu dem Kinderwagen gehört.

10. Verfahren nach Anspruch 1, 2, 3, 5, 6, 7, 8 oder 9, wobei das gepaarte Endgerät ein Smartphone oder ein am Körper tragbares Smart-Gerät ist.

11. Kinderwagenalarmierungsvorrichtung, umfassend:
einen Prozessor (1420), und
einen Speicher (1404), der dafür konfiguriert ist, eine durch den Prozessor ausführbare Instruktion zu speichern,
wobei der Prozessor dafür konfiguriert ist:
einen Druckwert eines Kinderwagens durch einen Drucksensor zu messen,
zu detektieren, ob ein gepaartes Endgerät, das zu dem Kinderwagen gehört, in einem voreingestellten Entfernungsbereich vorhanden ist, wenn der Druckwert des Kinderwagens auf einen voreingestellten Druckbereich reduziert wird, und
die Alarmierung auszuführen, wenn kein gepaartes Endgerät detektiert wird,
wobei der Prozessor (1420), um den Druckwert des Kinderwagens durch den Drucksensor zu messen, ferner dafür konfiguriert ist:
eine Last des gesamten Kinderwagens durch einen ersten Drucksensor, der an einem Rad des Kinderwagens angeordnet ist, zu detektieren, wobei die Last des gesamten Kinderwagens als ein erster Druckwert des Kinderwagens dient, oder
eine Last eines Korbes des Kinderwagens durch einen zweiten Drucksensor, der an dem Korb angeordnet ist, zu detektieren, wobei die Last des Korbes als ein zweiter Druckwert des Kinderwagens dient.

12. Computerprogramm, das Instruktionen zum Ausführen der Schritte eines Kinderwagenalarmierungsverfahrens nach einem der Ansprüche 1 bis 10 enthält, wenn das Programm durch einen Computer ausgeführt wird.

13. Aufzeichnungsmedium, das durch einen Computer gelesen werden kann und auf dem ein Computerprogramm gespeichert ist, das Instruktionen zum Ausführen der Schritte eines Kinderwagenalarmierungsverfahrens nach einem der Ansprüche 1 bis 10 enthält.

## Revendications

1. Procédé d'alarme de poussette, comprenant :
la mesure (110, 210) d'une valeur de pression d'une poussette via un capteur de pression, dans lequel la mesure de la valeur de pression de la poussette via le capteur de pression comprend :
la détection d'une charge de l'ensemble de la poussette via un premier capteur de pression agencé sur une roue de la poussette, la charge de l'ensemble de la poussette servant en tant que première valeur de pression de la poussette ; ou
la détection d'une charge d'une cabine de la poussette via un second capteur de pression agencé sur la cabine, la charge de la cabine servant en tant que seconde valeur de pression de la poussette ;
la détection (120, 220) du fait qu'une borne appariée correspondant à la poussette existe ou non dans une plage de distance préréglée lorsque la valeur de pression de la poussette est réduite à une plage de pression préréglée ; et
le lancement (130, 230) d'une alarme lorsqu'aucune borne appariée n'a été détectée.

2. Procédé selon la revendication 1, dans lequel la mesure de la valeur de pression de la poussette via le capteur de pression comprend la détection de la charge de l'ensemble de la poussette via le premier capteur de pression agencé sur la roue de la poussette, et dans lequel la détection du fait que la borne appariée correspondant à la poussette existe ou non dans la plage de distance préréglée lorsque la valeur de pression de la poussette est réduite à la plage de pression préréglée comprend :
la détection du fait que la borne appariée correspondant à la poussette existe ou non dans la plage de distance préréglée lorsque la première valeur de pression de la poussette est réduite à une première plage de pression préréglée,
dans lequel la première plage de pression préréglée correspond au premier capteur de pression et est associée à un poids d'une personne ou d'un article dans la poussette.

3. Procédé selon la revendication 1, dans lequel la mesure de la valeur de pression de la poussette via le capteur de pression comprend la détection de la charge de la cabine du véhicule via le second capteur de pression agencé sur la cabine, et dans lequel la détection du fait que la borne appariée correspondant à la poussette existe ou non dans la plage de distance préréglée lorsque la valeur de pression de la poussette est réduite à la plage de pression préréglée comprend :
la détection du fait que la borne appariée correspondant à la poussette existe ou non dans la plage de distance préréglée lorsque la seconde valeur de pression de la poussette est réduite à une seconde plage de pression préréglée,
dans lequel la seconde plage de pression préréglée correspond au second capteur de pression et est associée à un poids d'une personne ou d'un article dans la cabine.

4. Procédé selon la revendication 1, 2 ou 3, dans lequel la détection du fait que la borne appariée correspondant à la poussette existe ou non dans la plage de distance préréglée comprend :
la détection du fait que la borne appariée correspondant à la poussette existe ou non dans la plage de distance préréglée via Bluetooth ou la fidélité sans fil (WiFi).

5. Procédé selon l'une quelconque des revendications 1 à 4 dans lequel le lancement d'une alarme comprend :
le lancement d'une alarme en faisant sonner une alarme ; et/ou
l'envoi d'un message d'alarme à la borne appariée via un réseau mobile ou l'Internet.

6. Procédé selon l'une quelconque des revendications 1 à 5 dans lequel après le lancement d'une alarme, le procédé comprend :
la suppression (240) d'alarme lorsque qu'un message de suppression d'alarme est reçu depuis la borne appariée.

7. Procédé selon l'une quelconque des revendications 1 à 6 dans lequel après le lancement d'une alarme, le procédé comprend :
la suppression (250) d'alarme lorsqu'il a été détecté qu'une distance entre la poussette et la borne appariée est inférieure à un seuil de plage de distance préréglée.

8. Procédé selon l'une quelconque des revendications 1 à 7 dans lequel le procédé comprend en outre :
l'établissement (260) d'une connexion avec la borne appariée via Bluetooth ou la fidélité sans fil (WiFi) lorsque la borne appariée a été détectée ; et
l'envoi (270) d'un prompteur d'alarme à la borne appariée via la connexion.

9. Procédé selon l'une quelconque des revendications 1 à 8 dans lequel avant la détection de la valeur de pression de la poussette, le procédé comprend en outre :
la réalisation d'un appariement avec au moins une borne préréglée, la borne préréglée appariée servant en tant que borne appariée correspondant à la poussette.

10. Procédé selon la revendication 1, 2, 3, 5, 6, 7, 8 ou 9 dans lequel la borne appariée est un téléphone intelligent ou un dispositif intelligent portable.

11. Dispositif d'alarme de poussette, comprenant :
un processeur (1420) ; et
une mémoire (1404) configurée pour stocker une instruction pouvant être exécutée par le processeur,
dans lequel le processeur est configuré pour :
mesurer une valeur de pression d'une poussette via un capteur de pression ;
détecter si une borne appariée correspondant à la poussette existe ou non dans une plage de distance préréglée lorsque la valeur de pression de la poussette est réduite à une plage de pression préréglée ; et
lancer une alarme lorsqu'aucune borne appariée n'a été détectée,
dans lequel pour mesurer la valeur de pression de la poussette via le capteur de pression, le processeur (1420) est en outre configuré pour :
détecter une charge de l'ensemble de la poussette via un premier capteur de pression agencé sur une roue de la poussette, la charge de l'ensemble de la poussette servant en tant que première valeur de pression de la poussette ; ou
détecter une charge d'une cabine de la poussette via un second capteur de pression agencé sur la cabine, la charge de la cabine servant en tant que seconde valeur de pression de la poussette.

12. Programme d'ordinateur incluant des instructions pour exécuter les étapes d'un procédé d'alarme de poussette selon l'une quelconque des revendications 1 à 10 lorsque ledit programme est exécuté par un ordinateur.

13. Support d'enregistrement lisible par un ordinateur et présentant enregistré sur lui un programme d'ordinateur incluant des instructions pour exécuter les étapes d'un procédé d'alarme de poussette selon l'une quelconque des revendications 1 à 10.
